(19) **Europäisches Patentamt / European Patent Office / Office européen des brevets**

(11) **EP 2 292 530 B1**

(12) **EUROPEAN PATENT SPECIFICATION**

(45) Date of publication and mention
of the grant of the patent:
**07.06.2017 Bulletin 2017/23**

(51) Int Cl.:
*A01P 1/00* (2006.01)  *B65D 81/24* (2006.01)
*A23L 3/3481* (2006.01)  *A61L 2/00* (2006.01)
*B65D 81/28* (2006.01)  *C02F 1/50* (2006.01)
*A01N 25/34* (2006.01)

(21) Application number: **09773450.3**

(22) Date of filing: **30.06.2009**

(86) International application number:
**PCT/JP2009/061896**

(87) International publication number:
**WO 2010/001872 (07.01.2010 Gazette 2010/01)**

(54) **PRESERVATIVE MATERIAL AND STORAGE METHOD FOR LIQUID**

SCHUTZMATERIAL UND LAGERUNGSVERFAHREN FÜR FLÜSSIGKEITEN

MATÉRIAU DE PROTECTION ET PROCÉDÉ DE STOCKAGE POUR LIQUIDE

(84) Designated Contracting States:
**CZ DE FR IT**

(30) Priority: **03.07.2008 JP 2008174294
30.09.2008 JP 2008252438**

(43) Date of publication of application:
**09.03.2011 Bulletin 2011/10**

(73) Proprietor: **Nisshinbo Holdings, Inc.
Tokyo 103-8650 (JP)**

(72) Inventors:
• **SASAKI, Naokazu
Chiba-shi
Chiba 267-0056 (JP)**

• **OSUGA, Noriko
Chiba-shi
Chiba 267-0056 (JP)**

(74) Representative: **Bailey, Sam Rogerson et al
Mewburn Ellis LLP
City Tower
40 Basinghall Street
London EC2V 5DE (GB)**

(56) References cited:
**EP-A2- 0 408 292      WO-A1-03/064013
WO-A1-2005/009589   JP-A- 2002 225 910
JP-A- 2006 241 636   JP-A- 2008 127 496**

**Description**

TECHNICAL FIELD

The present invention relates to a storage method for liquids using a preservative material which is composed of a nanofiber material.

BACKGROUND ART

Liquids that have been placed in containers, such as eye drops, cosmetics, toiletries, beverages and inks, are sometimes used over a relatively long period of time after the container is opened.

In such cases, to prevent the quality of the liquid from deteriorating during the period of use due to airborne microorganisms and falling microorganisms and fungal spores which enter the container and grow therein, in addition to the ingredients for achieving the intended effects of the contents themselves, use is also generally made of additives such as antibacterial agents and preservatives.

Synthetic compounds such as synthetic preservatives have often been used as such additives, but because of the rise in the safety consciousness of the consumer in recent years, the preference nowadays is for the use of products of natural origin (see Patent Documents 1 to 4).

However, additives such as preservatives and antiseptic agents not only lead to a decline in the objects and effects of the contents themselves, but various other problems arise, such as an undesirable odor or taste and color, adverse effects on the human body (e.g., chapped skin, discomfort, skin irritation), the extra cost of the additives, and an increase in the elements of quality control.

For example, when a synthetic compound is added, depending on the physical constitution of the user, this may give rise to a hypersensitivity reaction. When this happens, even if the chief ingredients are harmless in humans, people who develop a hypersensitivity reaction are unable to use the liquid.

As for products of natural origin, these in themselves sometimes have a distinctive odor or taste and color, which often limits the products in which they can be used. Moreover, there are not many types of naturally occurring products which can actually be used.

PRIOR-ART DOCUMENTS

PATENT DOCUMENTS

    Patent Document 1: JP-A 2001-178431
    Patent Document 2: JP-A 2000-229804
    Patent Document 3: JP-A 6-70730
    Patent Document 4: JP-A 2004-59525

SUMMARY OF THE INVENTION

PROBLEMS TO BE SOLVED BY THE INVENTION

The present invention was arrived at in light of the above circumstances. The object of the invention is to provide a storage method for liquids which is capable of preserving a liquid for a relatively long period of time without the addition of additives such as antibacterial agents

MEANS FOR SOLVING THE PROBLEMS

The inventors have conducted extensive investigations in order to achieve the above objects. As a result, they have discovered that by bringing a suitable nanofiber material having numerous pores in contact with a liquid, the growth of microorganisms within the liquid is suppressed or microorganisms within the liquid are destroyed. Moreover, they have found that this nanofiber material can be advantageously used as a preservative material for liquids.

Accordingly, the present invention provides a storage method for liquids as set out in claim 1. In one embodiment, liquid is held in said nanofiber material in an amount not greater than a void volume of the nanofiber material. The method may employ a storage container for liquids, comprising at least one opening and an interior in which a liquid is placed, wherein the nanofiber material is disposed at the interior in such a way as to contact the liquid. The method may employ a storage container for liquids, comprising at least one opening and an interior in which a liquid is placed, wherein a filter having at least one layer of the nanofiber material is provided at the opening in such a way as to isolate the interior of the container from the exterior.

## EFFECTS OF THE INVENTION

This invention enables liquids, such as pharmaceuticals, cosmetics, toiletries, oral hygiene agents, beverages, items of stationery, liquid cultures and liquid manure, to be stored for an extended period of time without the addition of additives such as antibacterial agents. That is, the invention is able, without the use of additives, to suppress microbial toxins and odors which are generated by the growth of microorganisms.

The preservative material for liquids used in the invention renders unnecessary additives such as antibacterial agents that have hitherto been used, thereby making it possible not only to eliminate deterioration in the inherent effects of liquids such as pharmaceutical products and in the odor, taste, color and the like of such liquids, but also to store these liquids in a condition that is safe for the human body.

## DESCRIPTION OF THE PREFERRED EMBODIMENTS

The invention is described more fully below.

The preservative material for liquids used in the invention is composed of a nanofiber material having a plurality of pores. The shape of the nanofiber material is not subject to any particular limitation, provided it has numerous pores. Examples include cotton wool-like, nonwoven fabric-like, and felt-like nanofiber materials. Blending or covering with fibers having a fiber diameter of 1 $\mu$m or more may be carried out by a known technique.

The nanofibers account for a proportion (weight ratio) of the nanofiber material which is not subject to any particular limitation but, in order to fully elicit the effects of the invention, is preferably more than 50 wt %, more preferably at least 70 wt %, and even more preferably at least 80 wt %.

The fibers making up the nanofiber material have an average fiber diameter of from 10 to 800 nm, and more preferably from 50 to 700 nm.

The basis weight of the nanofiber material, although not subject to any particular limitation, is preferably from about 1 to about 100 $g/m^2$ and especially from about 10 to about 70 $g/m^2$.

In addition, the diameter of the pores in the nanofiber material is from about 0.001 to about 100 $\mu$m, preferably from about 0.01 to about 10 $\mu$m, and more preferably from about 0.01 to about 5 $\mu$m.

When the above nanofiber material is used as the subsequently described filter, by setting the minimum pore size therein to 0.1 $\mu$m or less, preferably from 0.01 to 0.1 $\mu$m, and more preferably from 0.01 to 0.08 $\mu$m, and by setting the maximum pore size to more than 0.1 $\mu$m but not more than 1 $\mu$m, preferably more than 0.2 $\mu$m but not more than 1 $\mu$m, and more preferably from 0.3 to 1 $\mu$m, microorganisms present outside of the container can be prevented from entering the interior of the container.

The starting polymer for the nanofibers is not subject to any particular limitation, provided it is a water-insoluble polymer. Illustrative examples include polyester resins, polyamide resins, polyurethane resins, polyacrylic resins, polyamideimide resins, polyvinyl chloride resins, polystyrene resins, polyimide, polyarylate, polyaniline, polypyrrole, polythiophene, cellulose and cellulose derivatives.

The nanofibers used in the invention may be obtained by spinning a solution (composition) of the above polymer dissolved in a suitable solvent using any of various spinning processes, such as electrostatic spinning, spunbonding, melt blowing and flash spinning.

In the practice of the invention, the use of an electrostatic spinning process, which is capable of manufacturing the fibers to a relatively uniform diameter is especially preferred.

Electrostatic spinning is a process in which, as an electrically charged electrostatic spinning dope (resin solution) is spun within an electrical field, the dope is broken up by forces of repulsion between the electric charges, resulting in the formation of a very fine fibrous material composed of the resin.

The basic configuration of the apparatus which carries out electrostatic spinning includes a first electrode which also serves as a nozzle for discharging the dope to be electrostatically spun and which applies to the dope a high voltage of from several thousands to several tens of thousands of volts, and a second electrode which faces the first electrode. The dope which has been ejected or shaken from the first electrode becomes nanofibers due to the high-speed jets and the subsequent folding and expansion of the jets within the electrical field between the two opposed electrodes, and collects on the surface of the second electrode, thereby giving nanofibers (nanofiber material).

The solvent used in preparing the dope for electrostatic spinning is not subject to any particular limitation, provided it is able to dissolve the polymer. Illustrative examples of suitable solvents include acetone, methanol, ethanol, propanol, isopropanol, toluene, benzene, cyclohexane, cyclohexanone, tetrahydrofuran, dimethylsulfoxide, 1,4-dioxane, carbon tetrachloride, methylene chloride, chloroform, pyridine, trichloroethane, N,N-dimethylformamide, N,N-dimethylacetamide, N-methyl-2-pyrrolidone, ethylene carbonate, diethyl carbonate, propylene carbonate, acetonitrile, and organic acids such as formic acid, lactic acid and acetic acid. These solvents may be used singly or as mixtures of two or more thereof.

The storage method for liquids according to the invention involves bringing the preservative material for liquids described above into contact with a liquid.

Here, the preservative material and the liquid may come into contact in any suitable manner; the liquid may come into contact with only part of the surface of the preservative material, or (a portion of) the liquid may be impregnated into and held by at least some portion of the voids of the plurality of pores in the preservative material.

The amount of preservative material used is not subject to any particular limitation, provided it is an amount that ensures a sufficient probability of contact with microorganisms. Specifically, it is preferable to use at least 1 mg, more preferably at least 5 mg, and even more preferably at least 10 mg, of the preservative material per 500 mL of liquid.

Moreover, in an embodiment wherein a liquid is held in at least some portion of the voids of the plurality of pores in the nanofiber material making up the preservative material, the liquid may be held in an amount not greater than the void volume of the nanofiber material so as to give a liquid-containing nanofiber material.

In such a liquid-containing nanofiber material, because deterioration of the liquid held at the interior of the voids does not readily arise, the nanofiber material can be advantageously employed as, for example, sanitizing wipes, wet tissues, make-up puffs and sponges which are used over a relatively long period of time after being opened.

The liquid which is used for storage is exemplified in particular by liquids composed primarily of water, including pharmaceutical products such as eye drops, medicinal drinks and sprays; cosmetics such as toners, lotions, tonics, shampoos and rinses; liquids used in toiletries; liquids used in stationery, such as India ink and other types of ink; liquid cultures, liquid manure and water placed in vases; and liquids for drinking, such as drinking water, long shelf life water, juices and alcoholic beverages.

The storage container for liquids which may be used in the present invention may be an ordinary liquid storage container having at least one opening and an interior in which a liquid is placed, wherein a nanofiber material is disposed at the interior in such a way as to contact the liquid.

Here, the place where the nanofiber material is disposed is not subject to any particular limitation, provided it is a position that enables the nanofiber material to come into contact with the liquid. Examples include any place within the container, such as the inside wall or the bottom surface. However, because the liquid placed at the interior decreases with use, to enable constant contact between the liquid and the nanofiber material, when the material is fixed to the container, it is preferable to dispose the material in a manner so as to include the bottom surface of the container. Alternatively, the nanofiber material may be simply immersed or allowed to float in the liquid without being fixed to the container.

Specific modes of use are exemplified by those in which the nanofiber material is attached to the inside wall and bottom surface of a container such as a PET bottle, glass bottle, vase or eye drop container, or in which the nanofiber material is simply dropped into these containers.

Also, the inventive storage container for liquids may be one in which a filter having at least one layer of a nanofiber material is provided at the opening of the above ordinary liquid storage container in such a way as to separate the interior of the container from the exterior.

Here, the liquid and the nanofiber material come into contact when the liquid flows into the interior through the opening and/or when the liquid flows out to the exterior, thereby eliciting the antibacterial or disinfecting effects of the invention. As a result, liquid preserving effects are manifested.

When the above nanofiber material is used as a filter, as explained above, by adjusting the minimum pore diameter and the maximum pore diameter within specific ranges, the entry of microorganisms from the exterior can be blocked. Therefore, through the synergism of the sterilizing effects on microorganisms in the liquid and the blocking effect against organisms from the exterior, it is possible to preserve liquids for a longer period of time.

Moreover, it is possible to dispose a nanofiber material at the interior of the container, and also provide a filter which includes a nanofiber material.

The nanofiber material may be used alone as a filter, or it may be laminated with another nonwoven fabric or porous film or sheet and the resulting laminate used as a filter.

EXAMPLES

Tests and measurements in the Examples and Comparative Examples below were carried out by the following methods.

[1] Average Fiber Diameter

The fiber diameter was measured at 20 places selected at random from a micrograph obtained by capturing an image of the specimen surface at a magnification of 5000x with a scanning electron microscope (S-4800I, manufactured by Hitachi High-Technologies Corporation). The average (n = 20) for all the fiber diameters was calculated and treated as the average fiber diameter.

[2] Antibacterial Activity Measuring Test 1 (Cell Count Measurement Method)

The test was carried out using the following cell count measurement method (JIS L 1902) described in *Kokin Boshu Kako Seihin no Kako Koka Hyoka Shiken Manyuaru* [Manual for Evaluating and Testing the Effects of Treatment in Antibacterial Deodorization-Finished Products] established by the Sen'i Seihin Eisei Kako Kyogikai (Japanese Association for the Hygienic Finishing of Textiles).

A suspension of *Staphylococcus aureus* as the test organism was initially prepared by culturing this organism in a common bouillon medium and adjusting the concentration to from $10^6$ to $10^7$ cells/mL. The suspension (0.2 mL) was uniformly inoculated onto 0.4 g of the specimen in a sterilized threaded vial and static cultured at 36 to 38°C for 18 hours, following which 20 mL of sterile, buffered physiological saline was added to the vessel and the vessel contents were shaken vigorously by hand 25 to 30 times at an amplitude of 30 cm so as to disperse the live cells in the specimen within the liquid. Next, a suitable dilution series was created with sterile, buffered physiological saline, 1 mL of dilution at each stage was placed in two Petri dishes, and about 15 mL of standard agar culture medium was added. Culturing was then carried out at 36 to 38°C for 24 to 48 hours, following which the number of live colonies was counted and the live cell count in the specimen was computed in accordance with the degree of dilution. In rating the effects, the test was judged to be complete when the growth value exceeded 1.5. The bacteriostatic activity S and the bactericidal activity L were determined from the following formulas.

$$\texttt{Bacteriostatic activity S = B - C}$$

$$\texttt{Bactericidal activity L = A - C}$$

where

A: average common log value of live cell count for three specimens immediately after contacting a standard cloth with test organisms
B: average common log value of live cell count for three specimens after culturing standard cloth for 18 hours
C: average common log value of live cell count for three specimens after culturing antibacterially finished specimen for 18 hours

[3] Antibacterial Activity Measuring Test 2 (Antibacterial Finished Product - Antibacterial Test Method; JIS Z 2801)

*S. aureus, Escherichia coli* and *Klebsiella pneumoniae* as the test organisms were initially cultured on a common agar medium (Nissui Pharmaceutical Co., Ltd.), and the grown colonies were scraped off and suspended in a 1/500 concentration common bouillon medium (Eiken Chemical Co., Ltd.) to give test organism suspensions adjusted to about $10^6$ CFU (colony forming units)/mL.

A 50 mm square reinforced polyethylene film was placed in a sterile Petri dish, and the specimen (40 mm square, 0.1 g) was placed on top thereof. The test organism suspension (0.1 mL) was added dropwise to the specimen, and a 50 mm square reinforced polyethylene film was covered over and brought into close contact with the specimen. This state is one in which an amount of liquid not greater than the void volume of the specimen is held in the specimen. The inoculated specimen was then placed in a closed vessel held at a relative humidity of at least 90% RH and a temperature of 35±1°C, and allowed to act for 24 hours. After 24 hours of action, the specimen was recovered in a sterile stomacher bag, 10 mL of a soybean casein digest broth with lecithin and polysorbate (SCDLP) bouillon medium (Eiken Chemical Co., Ltd.) was added, and the test organisms were washed out. Using the washing as the stock solution, a ten-fold dilution series was prepared. One milliliter each of this sample stock solution and of the dilutions were prepared as pour plates with a standard agar medium (Nissui Pharmaceutical Co., Ltd.) and cultured at 35±1°C for 48 hours, following which the colonies that grew on the medium were counted and the number of test organisms for each specimen was determined.

[4] Antibacterial Activity Measuring Test 3 (Antibacterial Activity Evaluating Test for Airborne Organisms)

Using a 1 m$^3$ test chamber made of polyvinyl chloride, two stirring fans were placed in diagonally opposed corners on the floor surface. A bacterial suspension spraying hole and an airborne bacteria collecting hole were provided at the center of one sidewall of the test chamber, a bacterial suspension spraying device and a filter holder were connected thereto, and an airborne bacteria collecting unit was connected after the filter holder. A glass nebulizer containing a test organism suspension was used as the bacterial suspension spraying device, and a glass midget impinger was used as the airborne bacteria collecting unit.

*S. aureus* as the test organism was cultured in tryptic soy agar (TSA medium; available from Difco). The grown colonies were scraped off and suspended in sterile ion-exchanged water to form a test organism suspension adjusted to about 10$^9$ cells/mL.

Compressed air was delivered to the bacterial suspension-containing glass nebulizer from a compressor and the test organism suspension was sprayed into the test chamber at a rate of 0.2 mL/min for 10 minutes, thereby suspending the bacteria in air (the airborne cell count was about $2 \times 10^9$ cell/1,000 L). The suspended bacteria within the chamber were collected through a specimen (diameter, 49 mm) placed in the filter holder. That is, a glass midget impinger in which 20 mL of sterile physiological saline had been placed was connected after the filter holder, and air within the test chamber was collected each time at a rate of 5 L/min for 10 minutes (= 50 L). As a control, the airborne bacteria within the chamber were collected through a filter holder in which a specimen had not been placed.

Using as the stock solution the sterile physiological saline within the impinger after the test organisms had been collected, a ten-fold dilution series was prepared. One milliliter each of this sample stock solution and of the dilutions were prepared as pour plates with a TSA medium and cultured at 35°C for 48 hours, following which the grown colonies were counted and the number of organisms that passed through the specimen per 50 L of air was determined.

At the same time that the attached cells were passed through the specimen in this way, the cells that attached to the specimen were subjected to the subsequently described evaluation as specimen-attached cells. Air within the test chamber containing suspended cells was passed through the specimen placed in the filter holder at a rate of 5 L/min for 10 minutes (= 50 L), causing the test organisms to attach to the specimen. The specimen to which test organisms had been made to attach was removed from the filter holder, placed in a closed vessel filled with the vapor of a 1.8 wt % sodium chloride solution (35°C; relative humidity, ≥90%), and held for 24 hours.

The test specimens were then removed, each was placed in a sterile stomacher bag, 10 mL of SCDLP medium (Eiken Chemical Co., Ltd.) was added, and the attached cells were washed out. Using the washing as the stock solution, a ten-fold dilution series was created. One milliliter each of this sample stock solution and of the dilutions were prepared as pour plates with TSA medium and cultured at 35°C for 48 hours, following which the number of colonies that grew on the medium were counted and the number of attached cells was determined.

[5] Antibacterial Efficacy Measuring Test

Specimens were placed in amounts of 10 mg, 0.1 g or 0.2 g in a sterilized wide-mouth bottle (mouth diameter, 3 cm), and 500 mL of pre-sterilized drinking water was placed in each bottle so that the drinking water was in contact with all portions of the specimen. These bottles were left to stand uncapped at room temperature for 30 minutes, following which they were capped and held at room temperature for two weeks. After two weeks, 200 μL of each solution was inoculated onto a standard agar medium, incubated at 37°C for 48 hours, and the colonies that formed were observed. The antibacterial properties were evaluated based on the common bacteria within the solution.

-: no change (no colonies formed)
+: changed (colonies formed)

[6] Skin Toner Storage Efficacy Test

*S. aureus* and *E. coli* as the test organisms were initially cultured in a common agar medium (Nissui Pharmaceutical Co., Ltd.), and the grown colonies were scraped off and suspended in a 1/500 concentration common bouillon medium (Eiken Chemical Co., Ltd.) to give test organism suspensions adjusted to about 10$^7$ CFU (colony forming units)/mL. The test organism suspension (0.1 mL) was added to 100 mL of skin toner (FDR Lotion M, available from Fancl Corporation), and a toner test solution for each organism was prepared to a cell concentration of 10$^4$ CFU/mL. The toner test solutions were each dispensed in an amount of 30 mL to a 50 mL centrifuge tube and a given amount of the specimen was placed therein, following which the tubes were stored at room temperature for a given number of days (0, 1, 3 or 7 days). The cell counts for the toner test solutions were measured by the pour plate method after the respective number of days of storage had elapsed. As a control, a similar test was carried out on a skin toner test solution in which the specimen was not placed.

[7] Minimum Pore Size and Maximum Pore Size Measurement Test

The pore sizes were measured and evaluated as described below based on the bubble point method (ASTM F316, JIS K 3832).

Using a perm porometer (model CFP-1200A manufactured by PMI), dry air was passed through a sample having a measurement diameter of 25 mm and the air flow rate was observed as the air pressure was increased in stages (dry flow rate curve).

Next, the sample was soaked in Galwick (available from PMI) having a surface tension of 16 dynes/cm, and the soaked sample was pretreated by degassing in a vacuum drier so that no bubbles remained in the sample. Dry air was passed through the pretreated sample, and the air flow rate was observed as the air pressure was increased in stages (wet flow rate curve).

The minimum pore size and the maximum pore size were determined from these two dry and wet flow rate curves.

[1] Production of Preservative Material for Liquids Example 1: Polylactic Acid

Ten parts by weight of polylactic acid resin (LACEA H280, available from Mitsui Chemicals, Inc.) and 45 parts by weight of dimethylformamide (abbreviated below as "DMF") were mixed and heated to 60°C, thereby dissolving the polylactic acid resin in the DMF and obtaining 55 parts by weight of a polylactic acid-containing solution (solids content, 18 wt %).

This lactic acid-containing solution (spinning dope) was placed in a syringe and electrostatic spinning was carried out at a discharge tip orifice diameter of 0.4 mm, an applied voltage of 20 KV (at room temperature and atmospheric pressure), and a distance from the discharge tip orifice to the fibrous substance collecting electrode of 15 cm, thereby giving a preservative material for liquids (nanofiber nonwoven fabric).

The resulting nonwoven fabric had an average fiber diameter of 500 nm, and fibers with a diameter greater than 3 $\mu$m were not observed.

Example 2: Nylon 6

Ten parts by weight of nylon 6 (A1030BRT, produced by Unitika, Ltd.) was dissolved in 57 parts by weight of formic acid at room temperature (25°C), thereby obtaining 67 parts by weight of a nylon 6-containing solution (solids content, 15 wt %).

This nylon 6-containing solution (spinning dope) was placed in a syringe and electrostatic spinning was carried out at a discharge tip orifice diameter of 0.4 mm and an applied voltage of 50 KV (at room temperature and atmospheric pressure), thereby giving a preservative material for liquids (nanofiber nonwoven fabric). The resulting nonwoven fabric had an average fiber diameter of 250 nm, and fibers with a diameter greater than 1 $\mu$m were not observed.

Example 3: Polyacrylonitrile

Ten parts by weight of polyacrylonitrile (Barex 1000S; available from Mitsui Chemicals, Inc.) was dissolved in 40 parts by weight of DMF at room temperature (25°C) to give 50 parts by weight of a polyacrylonitrile-containing solution (solids content, 20 wt %).

This polyacrylonitrile-containing solution (spinning dope) was placed in a syringe and electrostatic spinning was carried out at a discharge tip orifice diameter of 0.4 mm, an applied voltage of 30 KV (at room temperature and atmospheric pressure), and a distance from the discharge tip orifice to the fibrous substance collecting electrode of 15 cm, thereby giving a preservative material for liquids (nanofiber nonwoven fabric).

The resulting nonwoven fabric had an average fiber diameter of 100 nm, and fibers with a diameter greater than 1 $\mu$m were not observed.

Example 4: Cellulose

A cuprammonium solution was prepared by weighing out 0.768 g of copper hydroxide (Wako Pure Chemical Industries) into a flask, then adding 17.86 g of a 28% aqueous ammonia solution (Wako Pure Chemical Industries) and 1.372 g of water. One part by weight of absorbent cotton (Hakujuji Co., Ltd.) was added to 20 parts by weight of this solution, thereby giving 21 parts by weight of a cellulose-containing solution (solids content, about 4.8 wt %). The solution was stirred for 18 hours at room temperature, and the starting cotton was confirmed to have completely dissolved.

This cellulose-containing solution (spinning dope) was placed in a syringe and electrostatic spinning was carried out at a discharge tip orifice diameter of 0.4 mm, an applied voltage of 30 KV (at room temperature and atmospheric pressure), and a distance from the discharge tip orifice to the fibrous substance collecting electrode of 10 cm, thereby giving a nanofiber nonwoven fabric. The resulting nanofiber nonwoven fabric was washed with 0.1 mol/L hydrochloric acid so as to remove the copper ions, thereby giving the target preservative material for liquids (nanofiber nonwoven fabric).

The resulting nonwoven fabric had an average fiber diameter of 700 nm, and fibers with a diameter greater than 1.5 μm were not observed.

Comparative Example 1: Polylactic Acid

The same polylactic acid resin as in Example 1 was melt spun at a spinning temperature of 160°C using monofilament nozzles, thereby giving filaments having an average diameter of 20 μm. The resulting filaments were separated and dispersed, then deposited on a moving conveyer screen-type condenser to form a web. Next, the constituent filaments were united with each other by subjecting the web to a conventional nonwoven fabric-forming operation, thereby giving a nonwoven fabric. The average fiber diameter was 20,000 nm.

Comparative Example 2: Nylon 6

The same nylon 6 resin as in Example 2 was melted at a spinning temperature of 260°C, and formed into a nonwoven fabric by the same process as in Comparative Example 1. The average fiber diameter was 15,000 nm.

Comparative Example 3: Polyacrylonitrile

The same polyacrylonitrile resin as in Example 3 was melted at a spinning temperature of 260°C using a pressure melter-type melt spinning machine, and formed into a nonwoven fabric by the same process as in Comparative Example 1. The average fiber diameter was 30,000 nm.

Comparative Example 4: Cellulose

The same absorbent cotton (Hakujuji Co., Ltd.) as in Example 4 was used. A web was formed by a conventional wet method, and a nonwoven fabric was obtained by directing a high-pressure stream of water at the cotton to mutually entangle the fibers. The average fiber diameter was 30,000 nm.

Antibacterial Activity Measuring Tests 1 to 3, the antibacterial efficacy measuring test, the skin toner storage efficacy test (Examples 2 and 3 only), and the minimum pore size and maximum pore size measurement test were carried out on the nonwoven fabrics obtained in Examples 1 to 4 and Comparative Examples 1 to 4. The results of Antibacterial Activity Measuring Test 1 are shown in Table 1, the results of Antibacterial Activity Measuring Test 2 are shown in Table 2, the results of Antibacterial Activity Measuring Test 3 are shown in Table 3 (passed cell count) and Table 4 (antibacterial activity against attached cells), the results of the antibacterial efficacy measuring test are shown in Table 5, the results of the skin toner storage efficacy test are shown in Table 6 (*S. aureus*) and Table 7 (*E. coli*), and results of the minimum pore size and maximum pore size measurement test are shown in Table 8.

Table 1

| | | Average fiber diameter (nm) | Resin | Antibacterial tests* | | |
|---|---|---|---|---|---|---|
| | | | | Live cell count | Bacteriostatic activity | Bactericidal activity |
| Example | 1 | 500 | polylactic acid | <600 | >4.1 | >1.5 |
| | 2 | 250 | nylon 6 | <600 | >4.1 | >1.5 |
| | 3 | 100 | polyacrylonitrile | <600 | >4.1 | >1.5 |
| | 4 | 700 | cellulose | <600 | >4.1 | >1.5 |
| Comparative Example | 1 | 20,000 | polylactic acid | $4.5 \times 10^7$ | -0.3 | -2.9 |
| | 2 | 15,000 | nylon 6 | $7.4 \times 10^7$ | -0.3 | -2.5 |
| | 3 | 30,000 | polyacrylonitrile | $7.2 \times 10^7$ | -0.3 | -1.8 |
| | 4 | 30,000 | cellulose | $7.9 \times 10^7$ | -0.3 | -2.5 |
| *Standard cloth (cotton) Immediately after inoculation: $1.9 \times 10^4$  After 18 hours of culturing: $7.9 \times 10^6$ | | | | | | |

Table 2

| | | Average fiber diameter (nm) | Resin | Live cell count | | |
|---|---|---|---|---|---|---|
| | | | | *Staphylococcus* aureus | *Klebsiella pneumoniae* | *Escherichia coli* |
| Example | 1 | 500 | polylactic acid | <10 | <10 | -- |
| | 2 | 250 | nylon 6 | <10 | <10 | 48 |
| | 3 | 100 | polyacrylonitrile | <10 | <10 | 1,800 |
| | 4 | 700 | cellulose | <10 | <10 | <10 |
| Comparative Example | 1 | 20,000 | polylactic acid | 380,000 | 1,500,000 | -- |
| | 2 | 15,000 | nylon 6 | 400,000 | 1,400,000 | -- |
| | 3 | 30,000 | polyacrylonitrile | 400,000 | 1,400,000 | -- |
| | 4 | 30,000 | cellulose | 420,000 | 1,600,000 | 20,000,000 |

Table 3

| Passed cell count | | | | |
|---|---|---|---|---|
| | | Average fiber diameter (nm) | Resin | Passed cell count (cells/50 L of air) |
| Example | 1 | 500 | polylactic acid | <10 |
| | 2 | 250 | nylon 6 | <10 |
| | 3 | 100 | polyacrylonitrile | <10 |
| | 4 | 700 | cellulose | <10 |
| Comparative Example | 1 | 20,000 | polylactic acid | 1,500,000 |
| | 2 | 15,000 | nylon 6 | 1,200,000 |
| | 3 | 30,000 | polyacrylonitrile | 1,400,000 |
| | 4 | 30,000 | cellulose | 1,600,000 |

Table 4

| Antibacterial activity against attached cells | | | | |
|---|---|---|---|---|
| | | Average fiber diameter (nm) | Resin | Attached cell count |
| Example | 1 | 500 | polylactic acid | <10 |
| | 2 | 250 | nylon 6 | <10 |
| | 3 | 100 | polyacrylonitrile | <10 |
| | 4 | 700 | cellulose | <10 |
| Comparative Example | 1 | 20,000 | polylactic acid | 3,300,000 |
| | 2 | 15,000 | nylon 6 | 2,100,000 |
| | 3 | 30,000 | polyacrylonitrile | 4,200,000 |
| | 4 | 30,000 | cellulose | 4,200,000 |

Table 5

| | | Average fiber diameter (nm) | Resin | Amount of preservative material | | |
|---|---|---|---|---|---|---|
| | | | | 10 mg | 0.1 g | 0.2 g |
| Example | 1 | 500 | polylactic acid | - | - | - |
| | 2 | 250 | nylon 6 | - | - | - |
| | 3 | 100 | polyacrylonitrile | - | - | - |
| | 4 | 700 | cellulose | - | - | - |
| Comparative Example | 1 | 20,000 | polylactic acid | + | + | + |
| | 2 | 15,000 | nylon 6 | + | + | + |
| | 3 | 30,000 | polyacrylonitrile | + | + | + |
| | 4 | 30,000 | cellulose | + | + | + |
| Control: distilled water only + | | | | | | |

Table 6

| Skin toner storage efficacy test (*S. aureus*) | | | | | | | |
|---|---|---|---|---|---|---|---|
| | | Specimen | | S. *aureus* count | | | |
| | | Resin | Weight (g)/ 30 mL of test solution | 0 days | After 1 day of storage | After 3 days of storage | After 7 days of storage |
| Example | 2 | nylon 6 | 0.4 | -- | 16,000 | 2,000 | <10 |
| | 2 | nylon 6 | 0.2 | -- | 19,000 | 4,000 | <10 |
| | 3 | polyacrylonitrile | 0.4 | -- | 12,000 | <10 | <10 |
| | 3 | polyacrylonitrile | 0.2 | -- | 12,000 | 260 | <10 |
| Control | | -- | -- | 37,000 | 22,000 | 14,000 | 8,400 |
| Control: Skin toner test solution only | | | | | | | |

Table 7

| Skin toner storage efficacy test (*E. coli*) | | | | | | | |
|---|---|---|---|---|---|---|---|
| | | Specimen | | *E. coli* count | | | |
| | | Resin | Weight (g)/ 30 mL of test solution | 0 days | After 1 day of storage | After 3 days of storage | After 7 days of storage |
| Example | 2 | nylon 6 | 0.4 | -- | 21,000 | 7,000 | <10 |
| | 2 | nylon 6 | 0.2 | -- | 26,000 | 7,600 | 40 |
| | 3 | polyacrylonitrile | 0.4 | -- | 20,000 | 230 | <10 |
| | 3 | polyacrylonitrile | 0.2 | -- | 23,000 | 2,400 | <10 |
| Control | | -- | -- | 44,000 | 22,000 | 22,000 | 11,000 |
| Control: Skin toner test solution only | | | | | | | |

Table 8

| | | Average fiber diameter (nm) | Resin | Pore size ($\mu$m) | |
|---|---|---|---|---|---|
| | | | | Minimum | Maximum |
| Example | 1 | 500 | polylactic acid | 0.0432 | 0.7070 |
| | 2 | 250 | nylon 6 | 0.0176 | 0.501 |
| | 3 | 100 | polyacrylonitrile | 0.0210 | 0.8560 |
| | 4 | 700 | cellulose | 0.0500 | 0.9500 |
| Comparative Example | 1 | 20,000 | polylactic acid | 15.0 | 102.0 |
| | 2 | 15,000 | nylon 6 | 9.0 | 80.5 |
| | 3 | 30,000 | polyacrylonitrile | 19.0 | 132.3 |
| | 4 | 30,000 | cellulose | 19.0 | 132.3 |

It is apparent from Tables 1 to 4 that the preservative materials obtained in Examples 1 to 4 had antibacterial activities, and it is apparent from Tables 5 to 7 that bacteria did not grow in solutions stored using these preservative materials. Moreover, it is apparent from Table 3 that the preservative materials used in Examples 1 to 4 allowed substantially no bacteria to pass through.

**Claims**

1.  A storage method for a liquid comprising the steps of (a) preparing a preservative material by spinning a water-insoluble polymer to produce a nanofiber material having a plurality of pores, wherein nanofibers making up said nanofiber material have an average fiber diameter of 10 to 800 nm, and the diameter of the pores in said nanofiber material is from 0.001 to 100 $\mu$m, said nanofiber material being without added antibacterial agents but having antibacterial activities for liquid; and (b) contacting the liquid with the preservative material.

2.  The method according to claim 1, wherein said diameter of the pores in said nanofiber material is from 0.01 to 10 $\mu$m.

3.  The method according to claim 1 or claim 2 wherein said liquid is held in said nanofiber material in an amount not greater than a void volume of the nanofiber material.

4.  The method according to any preceding claim wherein the nanofiber material is disposed at the interior of a storage container for the liquid, in such a way as to contact the liquid in said interior, said container having at least one opening.

5.  The method according to any of claims 1 to 4 which employs a storage container for the liquid, wherein a filter having at least one layer of said nanofiber material is provided at the opening of said container in such a way as to isolate the interior of the container from the exterior.

6.  A method according to claim 5, wherein said nanofiber material has the minimum pore size of 0.01 to 0.1 $\mu$m and the maximum pore size of more than 0.1 $\mu$m but not more than 1 $\mu$m.

**Patentansprüche**

1.  Lagerverfahren für eine Flüssigkeit, das folgende Schritte umfasst:

    (a) das Herstellen eines konservierenden Materials durch das Spinnen eines wasserunlöslichen Polymers zur Herstellung eines Nanofasermaterials mit einer Vielzahl von Poren, worin die Nanofasern, aus welchen das Nanofasermaterial besteht, einen durchschnittlichen Faserdurchmesser von 10 bis 800 nm aufweisen und der Durchmesser der Poren in dem Nanofasermaterial 0,001 bis 100 $\mu$m beträgt, wobei zu dem Nanofasermaterial keine antibakteriellen Mittel zugesetzt sind, aber das Nanofasermaterial antibakterielle Aktivitäten für Flüssigkeiten aufweist; und

(b) das Kontaktieren der Flüssigkeit mit dem konservierenden Material.

2. Verfahren nach Anspruch 1, worin der Durchmesser der Poren in dem Nanofasermaterial 0,01 bis 10 μm beträgt.

3. Verfahren nach Anspruch 1 oder 2, worin die Flüssigkeit in dem Nanofasermaterial in einer Menge aufgenommen ist, die das Hohlraumvolumen des Nanofasermaterials nicht übersteigt.

4. Verfahren nach einem der vorangegangenen Ansprüche, worin das Nanofasermaterial im Inneren eines Lagerbehälters für die Flüssigkeit so angeordnet ist, dass es mit der Flüssigkeit im Inneren in Kontakt steht, wobei der Behälter zumindest eine Öffnung aufweist.

5. Verfahren nach einem der Ansprüche 1 bis 4, bei dem ein Lagerbehälter für die Flüssigkeit verwendet wird, worin ein Filter mit zumindest einer Lage aus dem Nanofasermaterial an der Öffnung des Behälters so bereitgestellt ist, dass das Innere des Behälters von der Außenumgebung isoliert ist.

6. Verfahren nach Anspruch 5, worin das Nanofasermaterial eine Mindestporengröße von 0,01 bis 0,1 μm aufweist und die maximale Porengröße mehr als 0,1 μm, aber nicht mehr als 1 μm beträgt.

**Revendications**

1. Procédé de stockage pour un liquide, comprenant les étapes consistant à (a) préparer un matériau de conservation par filage d'un polymère insoluble dans l'eau pour produire un matériau de nanofibres ayant une pluralité de pores, dans lequel les nanofibres constituant ledit matériau de nanofibres ont un diamètre moyen de fibre de 10 à 800 nm, et le diamètre des pores dans ledit matériau de nanofibres est de 0,001 à 100 μm, ledit matériau de nanofibres n'ayant pas d'agent antibactérien ajouté mais ayant des activités antibactériennes pour un liquide ; et (b) mettre en contact le liquide avec le matériau de conservation.

2. Procédé selon la revendication 1, dans lequel ledit diamètre des pores dans ledit matériau de nanofibres est de 0,01 à 10 μm.

3. Procédé selon la revendication 1 ou la revendication 2, dans lequel ledit liquide est retenu dans ledit matériau de nanofibres en une quantité non supérieure à un volume de vide du matériau de nanofibres.

4. Procédé selon l'une quelconque des revendications précédentes, dans lequel le matériau de nanofibres est disposé à l'intérieur d'un conteneur de stockage pour le liquide, de manière à entrer en contact avec le liquide dans ledit intérieur, ledit conteneur ayant au moins une ouverture.

5. Procédé selon l'une quelconque des revendications 1 à 4, qui utilise un conteneur de stockage pour le liquide, dans lequel un filtre ayant au moins une couche dudit matériau de nanofibres est fourni au niveau de l'ouverture dudit conteneur de manière à isoler l'intérieur du conteneur vis-à-vis de l'extérieur.

6. Procédé selon la revendication 5, dans lequel ledit matériau de nanofibres a la taille de pore minimum de 0,01 à 0,1 μm et la taille de pore maximum de plus de 0,1 μm, mais de pas plus de 1 μm.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001178431 A
- JP 2000229804 A
- JP 6070730 A
- JP 2004059525 A